# EUROPÄISCHE PATENTSCHRIFT

(11) **EP 0 667 079 B1**
(45) Veröffentlichungstag und Bekanntmachung des Hinweises auf die Patenterteilung: **29.12.1999**
(21) Anmeldenummer: 93924001.6
(22) Anmeldetag: 12.10.1993
(51) Int. Cl.: H04M 1/72, H02J 7/10

(54) **VERFAHREN ZUM LADEN VON AKKUMULATOREN IN SCHNURLOSEN KOMMUNIKATIONSENDEINRICHTUNGEN**
PROCESS FOR CHARGING ACCUMULATORS IN CORDLESS COMMUNICATIONS EQUIPMENT
PROCEDE PERMETTANT DE CHARGER DES ACCUMULATEURS DANS DES EQUIPEMENTS DE COMMUNICATION SANS FIL

(30) Priorität: 30.10.1992 DE 4236811
(43) Veröffentlichungstag der Anmeldung: 16.08.1995
(73) Patentinhaber: SIEMENS AKTIENGESELLSCHAFT, 80333 München (DE)
(72) Erfinder: SIEMENS, Gerhard, D-46325 Borken (DE)
(86) Internationale Anmeldenummer: DE9300969
(87) Internationale Veröffentlichungsnummer: WO9410782

(56) Entgegenhaltungen:
- EP-A- 0 368 353
- WO-A-92/15142
- DE-A- 4 110 453
- GB-A- 2 251 515
- US-A- 4 392 101
- US-A- 5 140 251

## Beschreibung

Die Erfindung betrifft ein Verfahren zum Laden von Akkumulatoren in schnurlosen Kommunikationsendeinrichtungen gemäß dem Oberbegriff des Patentanspruches 1 und eine Anordnung zum Laden von Akkumulatoren in schnurlosen Kommunikationsendeinrichtungen gemäß dem Oberbegriff des Patentanspruches 10.

Für eine Energieversorgung von schnurlos an ein Kommunikationssystem bzw. an eine Basisstation angeschlossenen Kommunikationsendeinrichtungen bzw. Mobilstationen sind überwiegend wiederaufladbare Akkumulatoren vorgesehen. Die Ladung dieser Akkumulatoren wird häufig durch den Mobilstationen zugeordnete Ladeeinrichtungen bewirkt, wobei die Energieübertragung induktiv oder durch Kontakte erfolgt. Die Ladeenergiequelle ist bekannterweise durch eine Ladestromquelle realisiert, mit deren Hilfe ein auf den eingesetzten Akkumulator abgestimmter konstanter Strom erzeugt und an die Akkumulatoren weitergeleitet wird. Die stationären Ladeeinrichtungen sind üblicherweise an die öffentlichen Energieversorgungsnetze angeschlossen.

Aufgrund der Mobilität der schnurlosen Kommunikationsendeinrichtungen und der üblichen Ortsgebundenheit der Ladeeinrichtungen treten in schnurlosen Kommunikationsendeinrichtungen unterschiedlichste Betriebsmodi auf. Die Mobilstation selbst kann üblicherweise in einen Ruhemodus, d. h. funktionslosen bzw. spannungslosen Zustand, in einen Bereitschaftsmodus bzw. Stand-by-Modus, d. h. in einen Teilfunktionen aufweisenden Zustand und in einen Aktivmodus, d. h. sämtliche Funktionen aufweisenden Zustand gesteuert werden. Des weiteren wird bei Einbringen der Mobilstation in die Ladeeinrichtung gegebenenfalls ein Lademodus bewirkt, bei dem die Akkumulatoren mit einem vorgegebenen, konstanten Strom eine vorgegebene Zeit geladen werden. Aufgrund der unterschiedlichsten Betriebsmodi und der teilweise damit verbundenen, nicht mehr feststellbaren Kapazität der Akkumulatoren kann dies beim Laden zu einer Überladung und gegebenenfalls zur Zerstörung der Akkumulatoren führen.

Aus der DE-A1-37 32 339 ist ein Ladeverfahren für wartungsfreie Bleibatterien mit festgelegtem Elektrolyten bekannt. Hierbei handelt es sich um ein dreistufiges Ladeverfahren, bei dem bis zum Erreichen einer temperaturabhängigen Ladespannung zum Zeitpunkt t1 geladen wird, darauf mit dieser an die Batterietemperatur ständig angepaßte Spannung unbegrenzt bis t2 weitergeladen und in der dritten Stufe unbegrenzt bis t3 nachgeladen wird. Durch dieses dreistufige Ladeverfahren wird für Bleibatterien mit festgelegtem Elektrolyten eine sichere und schnelle Volladung erreicht.

Aus der DE-A1-38 32 841 ist ein System zur Ladung von wiederaufladbaren Batterien bekannt, bei dem nach der Messung der Spannung und der Temperatur der Batterie die zulässigen Bedingungen für die weitere Ladung der Batterie ermittelt werden. Dabei wird von einer Steuereinrichtung während des Ladevorgangs geprüft, ob die Ladung der Batterie innerhalb von Grenzen der zulässigen Betriebsbedingungen erfolgt. Dabei wird die Energiezufuhr vermindert, wenn die Prüfung ergibt, daß die Grenzen erreicht worden sind. Nach einer weiteren vorgegebenen Zeit wird dann die Energiezufuhr wieder gesteigert.

Aus der WO-A-92/15142, der US-A-5,140,251, der EP-A-0 368 353, der US-A-4,392,101 und der DE-A-41 10 453 sind jeweils Verfahren bzw. Anordnungen zum Laden von Akkumulatoren bekannt, wobei die Akkumulatoren mit Hilfe einer Ladestromquelle gemäß einer akkumulatorindividuellen, temperaturbeeinflußten Ladespannungskurve ladezustandsgesteuert geladen werden.

Aus der GB-A-2 251 515 ist weiterhin eine Anordnung zum Laden eines Akku-Packs, insbesondere für zelluläre Funktelefone bekannt. Der Akku-Pack besteht dabei aus einzelnen wiederaufladbaren Akkumulatorzellen und einem Speicher zur Speicherung von ladungsbezogenen Informationen (z. B. Spannungs/Strom-Charakteristika). Die Anordnung umfaßt insbesondere Mittel zum Wiederaufladen der Akkumulatorzellen, die aufgrund der in dem Speicher des Akku-Packs gespeicherten ladungsbezogenen Informationen spezielle akkumulatorzellenindividuelle Ladeprogramme durchführen.

Die der Erfindung zugrundeliegende Aufgabe ist darin zu sehen, ein Verfahren und eine Anordnung zum Laden von Akkumulatoren in schnurlosen Kommunikationsendeinrichtungen anzugeben, bei dem bzw. der unter Berücksichtigung unterschiedlicher Betriebsmodi der Kommunikationsendeinrichtungen (z. B. Ruhe-, Bereitschafts- und Aktivmodus) eine Überladung der Akkumulatoren vermieden wird.

Diese Aufgabe wird ausgehend von einer schnurlosen Kommunikationsendeinrichtung gemäß den Merkmalen des Oberbegriffs des Anspruchs 1 durch dessen kennzeichnende Merkmale und gemäß den Merkmalen des Oberbegriffs des Anspruchs 10 durch dessen kennzeichnende Merkmale gelöst.

Der wesentliche Aspekt des erfindungsgemäßen Verfahrens ist darin zu sehen, daß nach einem Ruhemodus der schnurlosen Kommunikationsendeinrichtung der Akkumulator ladezustandsge steuert geladen wird und nach einem darauf folgenden Betriebsmodus der schnurlosen Kommunikationsendeinrichtung der Akkumulator zeitgesteuert geladen wird. Hierdurch wird eine besonders vorteilhafte Kombination des ladezustandsgesteuerten Ladeverfahrens mit dem zeitgesteuerten Ladeverfahren bewirkt. Nach den relevanten Betriebsmodi wird demgemäß mit einfach zu realisierenden Mitteln zur Zeitmessung die Ladung des Akkumulators gesteuert, vorausgesetzt, die schnurlose Kommunikationsendeinrichtung befand sich nicht im Ruhemodus, d. h. die Information über die Kapazität des Akkumulators wurde nicht gelöscht. Das ladezustandsgesteuerte Ladeverfahren setzt dann ein, wenn die Mobilstation nach einem Ruhemodus über gegebenenfalls weitere Modi in einen Lademodus gesteuert wird. Die wesentlichen Vorteile des erfindungsgemaßen Verfahrens sind darin zu sehen, daß es unabhängig von einem vorhergehenden Betriebsmodus und damit einer gegebenenfalls unbekannten oder auch bekannten Kapazität des Akkumulators in schnurlosen Kommunikationsendeinrichtungen einsetzbar ist und eine Überladung des Akkumulators vermieden wird.

Gemäß einer vorteilhaften Weiterbildung des erfindungsgemäßen Verfahrens wird beim ladezustandsgesteuerten Verfahren mit Hilfe mehrerer Messungen der Ladespannung in vorgegebenen Zeitabständen und vorgegebenen Zeitintervallen der den Ladezustand, den geladenen Zustand oder den Überladezustand anzeigenden Bereich der Ladespannungskurve bestimmt und in Abhängigkeit des bestimmten Bereiches die Ladung fortgesetzt oder beendet wird. Hierdurch wird folglich bestimmt, ob der Akkumulator teilweise geladen, mit voller Kapazität geladen oder überladen ist (Anspruch 2).

Da die Ladespannungskurven von Akkumulatoren prinzipiell in dem den Ladezustand betreffenden Bereich steigt, in dem den geladenen Zustand betreffenden Bereich annähernd gleich bleibt und in dem den Überladezustand anzeigenden Bereich fällt, ist der den Ladezustand anzeigende Bereich durch überwiegend höherwerdende, gemessene Ladespannungen, der den geladenen Zustand anzeigende Bereich durch annähernd gleichbleibende, gemessene Ladespannungen und der den Überladezustand anzeigende Bereich durch überwiegend kleinerwerdende gemessene Ladespannungen bestimmbar (Anspruch 3). Hierzu werden die Ladespannungen regelmäßig, beispielsweise im Sekundenbereich, gemessen und dann innerhalb vorgegebener Zeitabstände, z. B. im Minutenbereich, daraus beispielsweise eine überwiegende Anzahl von gemessenen Ladespannungen repräsentierende Ladespannungsmeßwerte gebildet. Hierbei bleiben einzelne, beispielsweise durch Störsignale beeinflußte Fehlmessungen der Ladespannung unberücksichtigt bzw. beeinflussen den ermittelten Meßwert unwesentlich. Durch weitere Vergleichsmessungen der aktuellen mit den vorhergehend gemessenen Ladespannungsmeßwerten innerhalb vorgegebener Zeitintervalle - z. B. Stundenintervall - wird der aktuelle Zustand des Akkumulators ermittelt.

Nach dem Beenden des Ladens wird vorteilhaft auf eine Ladung zur Erhaltung der Energie in den Akkumulatoren umgeschaltet (Anspruch 4). Die Erhaltungsladung wird entweder durch eine Reduzierung des Ladestromes, z. B. auf 1/3 des Ladestroms, oder durch eine temporäre Ladung mit üblichem Ladestrom durchgeführt.

Beim zeitgesteuerten Ladeverfahren wird die Ladung entweder nach einer vorgegebenen maximalen Ladezeit (Anspruch 5), nach einem Aktivmodus und einer anschließenden Ladung des Akkumulators nach dem Ablauf einer mehrfachen Aktivmodusdauer (Anspruch 6) oder nach einem Bereitschaftsmodus die anschließende Ladung nach einem vorgegebenen Anteil der Bereitschaftsmodusdauer beendet (Anspruch 7).

Nach einer vorteilhaften Ausgestaltung des erfindungsgemäßen Verfahrens ist das Mittel zur Messung der Zeit durch eine von einem integrierten Verarbeitungstakt der schnurlosen Kommunikationsendeinrichtungen gesteuerte Zähleinrichtung realisiert (Anspruch 8). Die Zähleinrichtung ist sowohl programmtechnisch als auch schaltungstechnisch realisierbar.

Eine hinsichtlich Ladestrom auf den verwendeten Akkumulator abgestimmte Ladestromquelle ist als Normalladestromquelle oder Schnelladestromquelle ausgebildet (Anspruch 9). Hierdurch ist eine Anpassung an normalladbare oder schnelladbare Akkumulatoren möglich, wobei bei Einsatz von schnelladbaren Akkumulatoren die Betriebsfähigkeit der schnurlosen Kommunikationsendeinrichtungen in wesentlich kürzerer Zeit erreicht wird.

Im folgenden wird das erfindungsgemäße Verfahren anhand eines Blockschaltbildes, eines Diagrammes und eine Ablaufdiagrammes näher erläutert.

Dabei zeigen
Figur 1 in einem Blockschaltbild eine schnurlose Kommunikationsendeinrichtung,
Figur 2 die Ladespannungskurve eines Akkumulators, und
Figur 3 in einem Ablaufdiagramm eine programmtechnische Realisierung des erfindungsgemaßen Verfahrens.

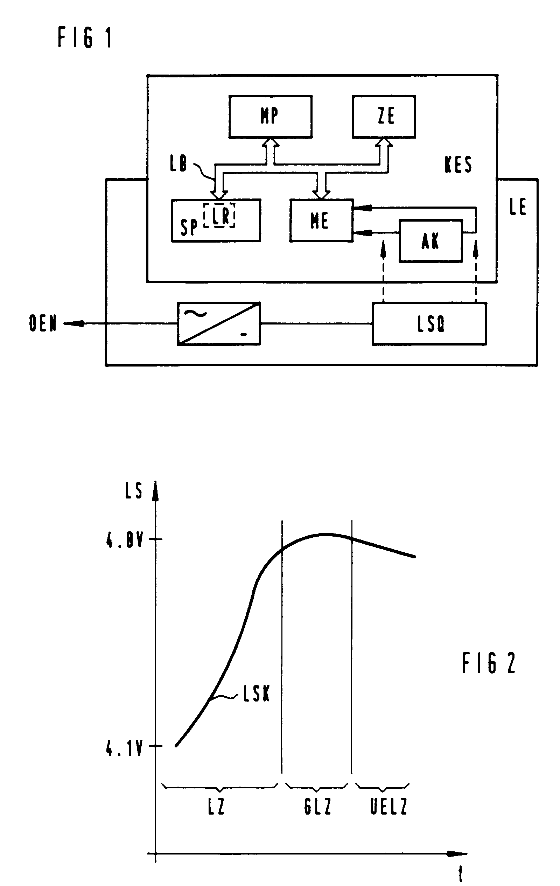

Figur 1 zeigt schematisch eine Ladeeinrichtung LE, in die eine schnurlose Kommunikationsendeinrichtung KES eingelegt ist. Die Ladeeinrichtung LE ist beispielsweise an das öffentliche Energieversorgungsnetz ÖN, z. B. 220 Volt Wechselstrom, angeschlossen. In der schnurlosen Kommunikationsendeinrichtung KES ist ein Akkumulator AK angeordnet, der beispielsweise durch drei Nickel-Cadmium-Akkumulatoren mit einer Nennspannung von je 1,25 Volt gebildet ist. Bei Mignon-Akkumulatoren beträgt der Ladestrom üblicherweise 50 mA und für schnelladefähige Mignon-Akkumulatoren beispielsweise 160 mA.

Des weiteren sei für das Ausführungsbeispiel angenommen, daß in der Ladeeinrichtung LE eine Ladestromquelle LSQ derart angeordnet ist, daß die Ladeenergie beispielsweise über induktive oder Kontaktkopplung - durch gestrichelte Linien dargestellt - an den Akkumulator AK führbar ist. Die Ladestromquelle LSQ ist hinsichtlich des Ladestroms, z.B. 50 oder 160 mA, auf den eingesetzten Akkumulator AK abgestimmt.

In Figur 2 ist für den in Figur 1 dargestellten Nickel-Cadmium-Akkumulator AK eine akkumulatorindividuelle, temperaturbeeinflußte Ladespannungskurve LSK dargestellt, wobei der Ordinate die Ladespannungen LS und der Abszisse die Ladezeit t zugeordnet sind. Die Ladespannungskurve LSK weist im wesentlichen einen den Ladezustand LZ, einen den geladenen Zustand GLZ und einen den überladenen Zustand ÜLZ anzeigenden Bereich auf. In dem den Ladezustand LZ aufweisenden Bereich verläuft die Ladespannungskurve LSZ annähernd exponentiell steigend zwischen 4,1 und 4,8 Volt Ladespannung. In dem den geladenen Zustand GLZ anzeigenden Bereich bleibt die Ladespannung LS annähernd gleich und in dem folgenden, den Überladungszustand ÜLZ anzeigenden Bereich fällt die Ladespannungskurve bzw. weist eine negative Steigung auf. Beim erfindungsgemäßen Verfahren werden mit Hilfe einer in der schnurlosen Kommunikationsendeinrichtung KES implementierten Steuerung MP - beispielsweise eines Mikroprozessors - einer von diesem gesteuerten Spannungsmeßeinrichtung ME - beispielsweise eine Analog/Digital-Spannungsmeßeinrichtung -, die mit dem Akkumulator AK verbunden ist, und einer Laderoutine LR, die in einer Speichereinrichtung SP gespeichert ist und die Steuereinrichtung MP steuert, die Ladespannungen LS gemessen und innerhalb vorgegebener Zeitabstände bzw. Zeitintervalle die Spannungsmeßwerte gebildet.

Zur Zeiterfassung ist des weiteren eine Zähleinrichtung ZE vorgesehen, mit deren Hilfe die Dauer der Betriebsmodi erfaßt und gespeichert werden. Vorteilhaft ist der den Mikroprozessor MP steuernde Verarbeitungstakt zur Taktsteuerung bzw. Zeitsteuerung der Zähleinrichtung ZE vorgesehen. Die Kommunikation zwischen dem Mikroprozessor MP, der Meßeinrichtung ME, der Zähleinrichtung ZE und dem Speicher SP wird über einen lokalen Bus LB - z.B. Mikroprozessorbus - bewirkt.

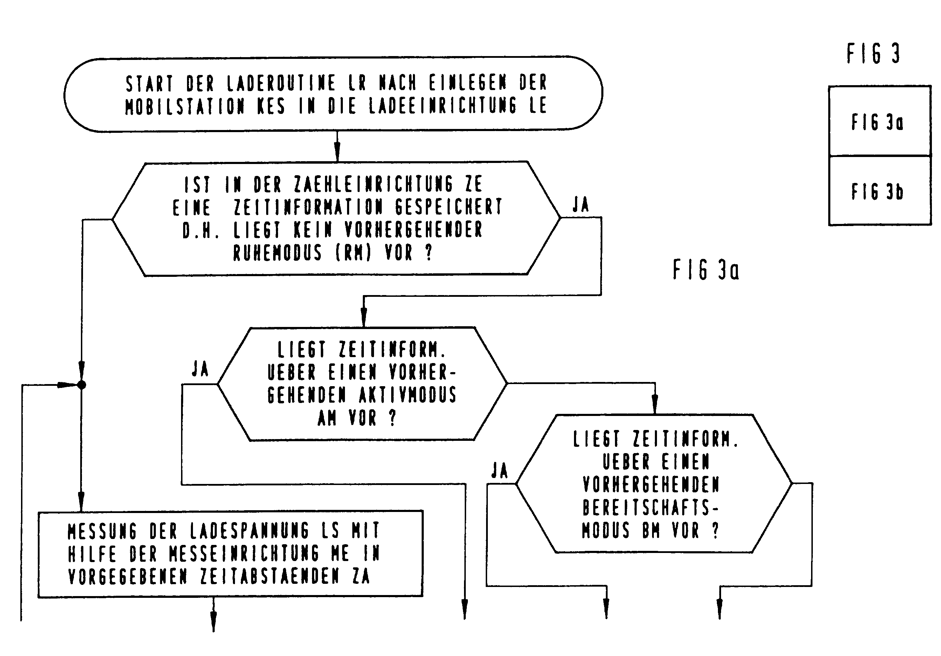

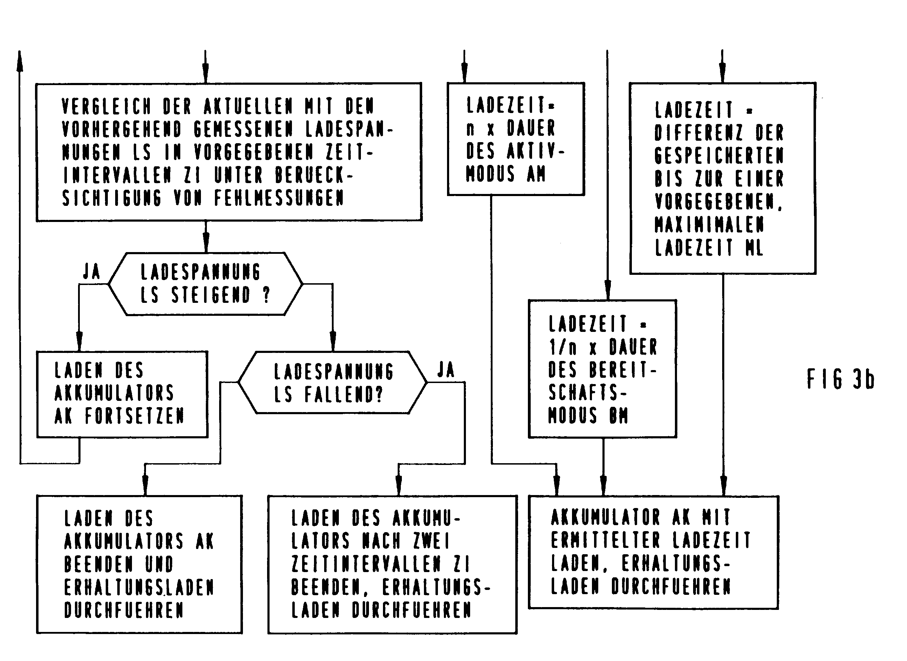

In Figur 3 ist anhand eines die Laderoutine LR repräsentierenden, selbsterläuternden Ablaufdiagrammes eine programmtechnische Realisierung des erfindungsgemäßen Verfahrens dargestellt.

## Patentansprüche

1. Verfahren zum Laden von Akkumulatoren (AK) in schnurlosen Kommunikationsendeinrichtungen (KES) mit einer Ladeeinrichtung (LE), wobei die Akkumulatoren (AK) mit Hilfe einer Ladestromquelle (LSQ) gemäß einer akkumulatorindividuellen, temperaturbeeinflußten Ladespannungskurve (LSK) ladezustandsgesteuert geladen werden,
**dadurch gekennzeichnet**, daß
a) das ladezustandsgesteuerte Laden der Akkumulatoren (AK) nach einem Ruhemodus (RM) der schnurlosen Kommunikationsendeinrichtungen (KES) erfolgt und
b) nach darauf folgenden Betriebsmodi (AM, BM) der schnurlosen Kommunikationsendeinrichtungen (KES) die Akkumulatoren (AK) in Abhängigkeit von der Art und der Zeitdauer der Betriebsmodi (AM, BM) zeitgesteuert geladen werden.

2. Verfahren nach Anspruch 1,
**dadurch gekennzeichnet**,
daß bei dem ladezustandsgesteuerten Laden der Akkumulatoren (AK) in vorgegebenen Zeitabständen (za) die Ladespannung (LS) gemessen wird,
daß durch Vergleichsmessungen der gemessenen Ladespannungswerte innerhalb vorgegebener Zeitintervalle (zi)
- entweder ein den Ladezustand (LZ) anzeigender Bereich der Ladespannungskurve (LSK) bestimmt und die Akkumulatoren (AK) weitergeladen werden,
- oder ein den geladenen Zustand (GLZ) anzeigender Bereich der Ladespannungskurve (LSK) bestimmt und die Ladung beendet wird,
- oder ein den Überladezustand (ÜLZ) anzeigender Bereich der Ladespannungskurve (LSK) nach zumindest zwei vorgegebenen Zeitintervallen bestimmt und die Ladung beendet wird.

3. Verfahren nach Anspruch 1 oder 2,
**dadurch gekennzeichnet**,
daß der den Ladezustand (LZ) anzeigende Bereich der Ladespannungskurve (LSK) durch innerhalb der Zeitintervalle (zi) gemessene, überwiegend höherwerdende Ladespannungen (LS) bestimmbar ist,
daß der den geladenen Zustand (GLZ) anzeigende Bereich der Ladespannungskurve (LSK) durch innerhalb der Zeitintervalle (zi) gemessene, annähernd gleichbleibende Ladespannungen (LS) bestimmbar ist und
daß ein den Überladezustand (ÜLZ) anzeigender Bereich der Ladespannungskurve durch innerhalb zumindest zweier vorgegebener Zeitintervalle (zi) gemessene, überwiegend kleiner werdende Ladespannungen (LS) bestimmbar ist.

4. Verfahren nach einem der vorhergehenden Ansprüche,
**dadurch gekennzeichnet**,
daß nach Beenden des ladezustandsgesteuerten Ladens auf eine Ladung zur Erhaltung der Energie in den Akkumulatoren (AK) umgeschaltet wird.

5. Verfahren nach einem der vorhergehenden Ansprüche,
**dadurch gekennzeichnet**,
daß beim zeitgesteuerten Laden der Akkumulatoren (AK) der Ladevorgang nach einer vorgegebenen maximalen, mit Hilfe eines Mittels zur Zeitmessung (ZE) bestimmbaren Ladezeit (ML) beendet wird.

6. Verfahren nach Anspruch 5,
**dadurch gekennzeichnet**,
daß beim zeitgesteuerten Laden mit Hilfe des Mittels zur Zeitmessung (ZE) die Dauer eines Aktivmodus (AM) der schnurlosen Kommunikationsendeinrichtungen (KES) erfaßt und ein anschließendes Laden der Akkumulatoren (AK) nach einer Ladezeit, die dem n-fachen der erfaßten Dauer entspricht, beendet wird.

7. Verfahren nach Anspruch 5 oder 6,
**dadurch gekennzeichnet**,
daß beim zeitgesteuerten Laden mit Hilfe des Mittels zur Zeitmessung (ZE) die Dauer eines Bereitschaftsmodus (BM) der schnurlosen Kommunikationsendeinrichtungen (KES) erfaßt und das anschließende Laden nach einem vorgegebenen Anteil der erfaßten Dauer beendet wird.

8. Verfahren nach einem der Ansprüche 5 bis 7,
**dadurch gekennzeichnet**,
daß das Mittel zur Zeitmessung (ZE) durch eine von einem internen Verarbeitungstakt der schnurlosen Kommunikationsendeinrichtungen (KES) gesteuerte Zähleinrichtung (ZE) realisiert ist.

9. Verfahren nach einem der vorhergehenden Ansprüche,
**dadurch gekennzeichnet,**
daß die akkumulatorenindividuelle Ladestromquelle (LSQ) als Normalladestromquelle oder Schnelladestromquelle ausgebildet ist.

10. Anordnung zum Laden von Akkumulatoren (AK) in schnurlosen Kommunikationsendeinrichtungen (KES), bei der die schnurlose Kommunikationsendeinrichtung (KES) mit dem Akkumulator (AK)
a) eine Steuereinrichtung (MP) mit einer der Steuereinrichtung (MP) zugeordneten Speichereinrichtung (SP) und eine Meßeinrichtung (ME) aufweist und
b) zum Laden des Akkumulators (AK) mit der Ladeeinrichtung (LE) eine Funktionseinheit derart bildet, daß der Akkumulator (AK) gemäß einer akkumulatorindividuellen, temperaturbeeinflußten Ladespannungskurve (LSK) ladezustandsgesteuert geladen wird
**dadurch gekennzeichnet**, daß
c) die Speichereinrichtung (SP) einen, eine Laderoutine ausführenden Mikroprozessor zur Steuerung der Steuereinrichtung (MP) aufweist und
d) die Steuereinrichtung (MP) mit der Meßeinrichtung (ME) und Mitteln zur Zeitmessung (ZE) derart verbunden ist, daß
d1) das ladezustandsgesteuerte Laden der Akkumulatoren (AK) nach einem Ruhemodus (RM) der schnurlosen Kommunikationsendeinrichtungen (KES) erfolgt und
d2) nach darauf folgenden Betriebsmodi (AM, BM) der schnurlosen Kommunikationsendeinrichtungen (KES) die Akkumulatoren (AK) in Abhängigkeit von der Art und der Zeitdauer der Betriebsmodi (AM, BM) zeitgesteuert geladen werden.

## Claims

1. Method for charging rechargeable batteries (AK) in cordless communications terminals (KES) having a charging device (LE), in which case the rechargeable batteries (AK) are charged with the aid of a charging current source (LSQ), with the charge state being controlled according to a charge voltage curve (LSK) which is specific to the rechargeable battery and is influenced by temperature,
characterized in that
a) the charge-state-controlled charging of the rechargeable batteries (AK) is carried out after a rest mode (RM) of the cordless communications terminals (KES) and
b) after operating modes (AM, BM), which follow this, of the cordless communications terminals (KES), the rechargeable batteries (AK) are charged with the time being controlled as a function of the nature and the time duration of the operating modes (AM, BM).

2. Method according to Claim 1,
characterized
in that, during the charge-state-controlled charging of the rechargeable batteries (AK), the charge voltage (LS) is measured at predetermined time intervals (za),
in that, by means of comparative measurements of the measured charge voltage values within predetermined time intervals (zi),
- either a region of the charge voltage curve (LSK) which indicates the charge state (LZ) is determined and the rechargeable batteries (AK) are charged further,
- or a region of the charge voltage curve (LSK) which indicates the charged state (GLZ) is determined, and the charging process is ended,
- or a region of the charge voltage curve (LSK) which indicates an overcharged state (ÜLZ) is determined after at least two predetermined time intervals, and the charging process is ended.

3. Method according to Claim 1 or 2,
characterized
in that the region of the charge voltage curve (LSK) which indicates the charge state (LZ) can be determined by means of charge voltages (LS) which are measured within the time intervals (zi) and generally become higher,
in that the region of the charge voltage curve (LSK) which indicates the charged state (GLZ) can be determined by means of charge voltages (LS) which are measured within the time intervals (zi) and remain approximately constant, and
in that a region of the charge voltage curve which indicates an overcharged state (ÜLZ) can be determined by means of charge voltages (LS) which are measured within at least two predetermined time intervals (zi) and generally become smaller.

4. Method according to one of the preceding claims,
characterized
in that, after the end of the charge-state-controlled charging process, a change is made to charging in order to maintain the energy in the rechargeable batteries (AK).

5. Method according to one of the preceding claims,
characterized
in that, during the time-controlled charging of the rechargeable batteries (AK), the charging process is ended after a predetermined maximum charging time (ML) which can be determined with the aid of a means for time measurement (ZE).

6. Method according to Claim 5,
characterized
in that, during the time-controlled charging process, the duration of an active mode (AM) of the cordless communications terminals (KES) is recorded with the aid of the means for time measurement (ZE), and subsequent charging of the rechargeable batteries (AK) is ended after a charging time which corresponds to n times the recorded duration.

7. Method according to Claim 5 or 6,
characterized
in that, during the time-controlled charging process, the duration of a standby mode (BM) of the cordless communications terminals (KES) is recorded with the aid of the means for time measurement (ZE), and the subsequent charging process is ended after a predetermined proportion of the recorded duration.

8. Method according to one of Claims 5 to 7,
characterized
in that the means for time measurement (ZE) is provided by a counting device (ZE) which is controlled by an internal processing clock in the cordless communications terminals (KES).

9. Method according to one of the preceding claims,
characterized
in that the rechargeable-battery-specific charging current source (LSQ) is designed as a normal charging current source or as a rapid charging current source.

10. Arrangement for charging rechargeable batteries (AK) in cordless communications terminals (KES), in which the cordless communications terminal (KES), with the rechargeable battery (AK),
a) has a control device (MP) having a memory device (SP) associated with the control device (MP), and has a measuring device (ME), and
b) forms a functional unit with the charging device (LE) for charging the rechargeable battery (AK), in such a manner that the rechargeable battery (AK) is charged with the charge state being controlled according to a charge voltage curve (LSK) which is specific to the rechargeable battery and is influenced by temperature,
characterized in that
c) the memory device (SP) has a microprocessor, which carries out a charging routine, for controlling the control device (MP), and
d) the control device (MP) is connected to the measuring device (ME) and to means for time measurement (ZE) in such a manner that
d1) the charge-state-controlled charging of the rechargeable batteries (AK) is carried out after a rest mode (RM) of the cordless communications terminals (KES), and
d2) after operating modes (AM, BM), which follow this, of the cordless communications terminals (KES), the rechargeable batteries (AK) are charged with the time being controlled as a function of the nature and the time duration of the operating modes (AM, BM).

## Revendications

1. Procédé de charge d'accumulateurs (AK) situés dans des équipements terminaux de télécommunications sans fil (KES) au moyen d'un dispositif de charge (LE), les accumulateurs (AK) étant chargés, de manière commandée par l'état de la charge, à l'aide d'une source de courant de charge (LSQ) selon une courbe de tension de charge (LSK) particulière à l'accumulateur et sensible à l'influence de la température,
caractérisé par le fait que
a) l'opération de charge des accumulateurs (AK), commandée par l'état de charge, s'effectue après un mode de repos (RM) des équipements terminaux de télécommunications sans fil (KES), et que
b) après des modes de fonctionnement (AM, BM) suivants des équipements terminaux de télécommunications sans fil (KES), les accumulateurs (AK) sont chargés de manière commandée par le temps, en fonction du type et de la durée des modes de fonctionnement (AM, BM).

2. Procédé selon la revendication 1,
caractérisé par le fait que, lors de l'opération de charge des accumulateurs (AK), commandée par l'état de charge, la tension de charge (LS) est mesurée à des instants prédéfinis (za),
que, par des mesures comparatives des valeurs mesurées de la tension de charge dans des intervalles de temps prédéfinis (zi),
- soit une zone, indiquant l'état de charge (LZ), de la courbe de tension de charge (LSK) est déterminée et les accumulateurs (AK) continuent d'être chargés,
- soit une zone, indiquant l'état chargé (GLZ), de la courbe de tension de charge (LSK) est déterminée et la charge est terminée,
- soit une zone, indiquant l'état de surcharge (ÜLZ), de la courbe de tension de charge (LSK) est déterminée après au moins deux intervalles de temps prédéfinis, et la charge est terminée.

3. Procédé selon la revendication 1 ou 2,
caractérisé par le fait que la zone, indiquant l'état de charge (LZ), de la courbe de tension de charge (LSK) peut être déterminée au moyen de tensions de charge (LS) mesurées dans les intervalles de temps (zi) et dans l'ensemble croissantes,
que la zone, indiquant l'état chargé (GLZ), de la courbe de tension de charge (LSK) peut être déterminée au moyen de tensions de charge (LS) mesurées dans les intervalles de temps (zi) et restant approximativement identiques, et
qu'une zone, indiquant l'état de surcharge (ÜLZ), de la courbe de tension de charge peut être déterminée au moyen de tensions de charge (LS) mesurées dans au moins deux intervalles de temps (zi) prédéfinis, et dans l'ensemble décroissantes.

4. Procédé selon l'une des revendications précédentes,
caractérisé par le fait que, lorsque l'opération de charge commandée par l'état de charge est terminée, une commutation sur une charge pour la conservation de l'énergie dans les accumulateurs (AK) s'effectue.

5. Procédé selon l'une des revendications précédentes,
caractérisé par le fait que, dans le cas d'une opération de charge des accumulateurs (AK), commandée par le temps, le processus de charge est terminé après un temps de charge (ML), maximal et prédéfini, pouvant être déterminé à l'aide d'un moyen servant à la mesure du temps (ZE).

6. Procédé selon la revendication 5,
caractérisé par le fait que, dans le cas d'une opération de charge commandée par le temps à l'aide du moyen servant à la mesure du temps (ZE), la durée d'un mode actif (AM) des équipements terminaux de télécommunications sans fil (KES) est détectée et une opération de charge suivante des accumulateurs (AK) est terminée après l'écoulement d'un temps de charge, qui correspond au multiple de la durée détectée.

7. Procédé selon la revendication 5 ou 6,
caractérisé par le fait que, dans le cas d'une opération de charge commandée par le temps à l'aide du moyen servant à la mesure du temps (ZE), la durée d'un mode de réserve (BM) des équipements terminaux de télécommunications sans fil (KES) est détectée et l'opération de charge suivante est terminée après une fraction prédéfinie de la durée détectée.

8. Procédé selon l'une des revendications 5 à 7,
caractérisé par le fait que le moyen servant à la mesure du temps (ZE) est mis en oeuvre par un dispositif de comptage (ZE) commandé par un cadencement de traitement interne des équipements terminaux de télécommunications sans fil (KES).

9. Procédé selon l'une des revendications précédentes,
caractérisé par le fait que la source de courant de charge (LSQ), particulière aux accumulateurs, peut être réalisée en tant que source de courant de charge normale ou en tant que source de courant de charge rapide.

10. Agencement destiné à la charge d'accumulateurs (AK) situés dans des équipements terminaux de télécommunications sans fil (KES), dans lequel l'équipement terminal de télécommunications sans fil (KES) comportant l'accumulateur (AK) présente
a) un dispositif de commande (MP), avec un dispositif de mémorisation (SP) associé au dispositif de commande (MP), et un dispositif de mesure (ME), et
b) dans lequel, pour l'opération de charge de l'accumulateur (AK) par le dispositif de charge (LE), une unité fonctionnelle est formée de telle manière que l'accumulateur (AK) soit chargé, de manière commandée par l'état de charge, selon une courbe de tension de charge (LSK) particulière à l'accumulateur et sensible à l'influence de la température,
caractérisé par le fait que
c) le dispositif de mémorisation (SP) présente un microprocesseur, exécutant un programme de charge et servant à la commande du dispositif de commande (MP), et que
d) que le dispositif de commande (MP) est relié au dispositif de mesure (ME) et à des moyens pour la mesure du temps (ZE) de telle manière
d1) que l'opération de charge des accumulateurs (AK), commandée par l'état de charge, s'effectue après un mode de repos (RM) des équipements terminaux de télécommunications sans fil (KES), et
d2) que, après des modes de fonctionnement (AM, BM) suivants des équipements terminaux de télécommunications sans fil (KES), les accumulateurs (AK) soient chargés, de manière commandée par le temps, en fonction du type et de la durée des modes de fonctionnement (AM, BM).
